# EUROPEAN PATENT APPLICATION

(11) **EP 4 342 619 A1**
(43) Date of publication of application: **27.03.2024**
(21) Application number: 22804562.1
(22) Date of filing: 10.05.2022
(51) Int. Cl.: B23K 26/00, B23K 26/082, B23K 26/142, B25H 7/04

(54) **LASER MACHINING DEVICE AND LASER MACHINING METHOD**

(30) Priority: 20.05.2021 JP 2021085254
(71) Applicant: Amada Co., Ltd., Isehara-shi, Kanagawa 259-1196 (JP)
(72) Inventor: SUGIYAMA, Akihiko, Isehara-shi, Kanagawa 259-1196 (JP)
(74) Representative: Grünecker Patent- und Rechtsanwälte PartG mbB
(86) International application number: PCT/JP2022/019773
(87) International publication number: WO 2022/244649

(57) **Abstract**

A laser processing machine (100) includes a processing head (35) that emits a laser beam from an opening (36a); a focusing lens (34) that focuses the laser beam on a surface of sheet metal (W); a carriage (22, 23) that moves a position of the processing head (35); a galvano scanner unit (32) that moves the laser beam emitted from the opening (36a); an assist gas supply device (70) that supplies an assist gas to the processing head (35); and an NC device (50). The NC device (50) controls the galvano scanner unit (32) such that the center of the laser beam that is emitted from the opening (36a) moves by a predetermined movement distance, from the center of the opening (36a) to the front of the traveling route of an irradiation position for the laser beam, and performs control for a mark-off line to be marked on the sheet metal (W) by controlling the carriage (22, 23) in such a way as to move the irradiation position for the laser beam along the traveling route.

## Description

### [TECHNICAL FIELD]

The present disclosure relates to a laser processing machine and a laser processing method.

### [BACKGROUND ART]

When a sheet metal is laser-processed, the sheet metal to be processed can be accurately processed by marking a marking-off line that indicates a processing point on the surface of the sheet metal to be processed.

Marking to form a marking-off line on the surface of a sheet metal is performed by irradiating the surface of the sheet metal with a laser beam using a laser processing machine and engraving the sheet metal with the laser beam. At that time, the laser processing machine irradiates a laser beam with a low energy output to such a degree that metal on the surface of the sheet metal vaporizes, while spraying an assist gas onto the sheet metal.

### [Citation List]

### [Patent Literature]

[Patent Literature 1] Japanese Unexamined Patent Application Publication No. 1999(H11)-000788

### [SUMMARY OF INVENTION]

A sheet metal after being processed may be coated. In such a case, there is an increasing demand for a marking-off line marked on the surface of the sheet metal before being processed to be left visible even after the sheet metal is painted. However, when the marking-off line is marked on the surface of the sheet metal with a low energy output using a laser beam as described above, the engraving of the marking-off line becomes shallow, and when the sheet metal is painted after being processed, the marking-off line does not remain.

For this reason, it is conceivable to mark a deeply engraved marking-off line by increasing the output energy of a laser beam irradiated by a laser processing machine. However, when the output energy of the irradiated laser beam increases, the amount of molten metal increases. As a result, molten metal that is blown off on the sheet metal by an assist gas adheres again onto and around the marked marking-off line, resulting in a problem that the marking-off line cannot be drawn neatly, or a protrusion caused by metal adhered around the marking-off line is generated.

As a laser processing machine capable of adjusting the direction in which molten metal generated when irradiating a laser beam is blown off, there is a laser processing machine which includes a mechanism to shift the center of a nozzle that emits the laser beam onto sheet metal from the center of the laser beam that is irradiated (see Patent Literature 1) . The use of this laser processing machine makes it possible to make an adjustment such that the molten metal which is generated is not blown off in the direction of the marked marking-off line.

However, when performing marking processing for a marking-off line using this laser processing machine, the position of the nozzle relative to the center of the laser beam is fixed. For this reason, when changing the traveling direction of the laser beam based on the shape of the marking-off line to be marked, the marking processing needs to be terminated once. Thereafter, the position of the nozzle needs to be readjusted so as to match to the traveling direction of the laser beam after the change, and then the marking processing needs to be resumed, resulting in a problem that the marking processing becomes complicated.

One or more embodiments provide a laser processing machine and a laser processing method with which it is possible with simple processing to prevent molten metal from adhering again on the surface of a sheet metal to be laser-processed and to mark a deeply engraved marking-off line with good quality.

A first aspect of one or more embodiments provides a laser processing machine including: a processing head in which a nozzle for emitting a laser beam from an opening is attached to a tip end of the processing head; a focusing lens that is provided in the processing head and configured to form a beam spot on a surface of sheet metal by focusing the laser beam; a processing head movement mechanism configured to move the processing head relative to the surface of the sheet metal; a beam movement mechanism configured to move the laser beam emitted from the opening, in the opening; an assist gas supply device configured to supply an assist gas to be sprayed onto the sheet metal from the opening, to the processing head when the sheet metal is processed; and a control device configured to control the beam movement mechanism such that a center of the laser beam that is emitted from the opening moves by a predetermined movement distance, from a center of the opening to in front on a traveling route of an irradiation position for the laser beam that is based on a processing program for marking a marking-off line with a predetermined shape on the sheet metal, and to perform control for the marking-off line with the predetermined shape to be marked on the sheet metal by controlling the processing head movement mechanism in such a way as to move the irradiation position for the laser beam along the traveling route.

According to the above laser processing machine, a beam movement mechanism moves, by a predetermined movement distance, the center of a laser beam to the front of a traveling route of an irradiation position for the laser beam that is based on a processing program for marking a marking-off line with a predetermined shape, and moves the irradiation position for the laser beam on sheet metal to be processed, thereby marking the marking-off line with the predetermined shape thereon. As a result, the direction in which molten metal generated by processing is blown off is inclined to a direction opposite to an area where the marking-off line is marked, thereby making it possible to mark a deeply engraved marking-off line with good quality on the sheet metal without the molten metal adhering to the marked marking-off line.

A second aspect of one or more embodiments provides a laser processing method including: when sheet metal is processed, by means of a laser processing machine provided with an assist gas supply device for supplying an assist gas to be sprayed onto sheet metal to a processing head in which a nozzle for emitting a laser beam from an opening is attached to a tip end of the processing head, irradiating a surface of the sheet metal with the laser beam that is focused, from the opening of the nozzle; and moving a center of the laser beam that is emitted from the opening by a predetermined movement distance, from a center of the opening to front of a traveling route of an irradiation position for the laser beam that is based on a processing program for marking a marking-off line with a predetermined shape on the sheet metal, and moving the irradiation position for the laser beam along the traveling route based on the processing program, thereby marking the marking-off line with the predetermined shape on the sheet metal.

According to the above laser processing method, the direction in which molten metal generated by processing is blown off is inclined to a direction opposite to an area where a marking-off line is marked, thereby making it possible to mark a deeply engraved marking-off line with good quality on a sheet metal without the molten metal adhering to the marked marking-off line.

In accordance with a laser processing machine and a laser processing method according to one or more embodiments, it is possible with simple processing to mark a deeply engraved marking-off line with good quality on the surface of sheet metal to be laser-processed.

### [BRIEF DESCRIPTION OF DRAWINGS]

[FIG. 1] FIG. 1 is a diagram illustrating an overall configuration example of a laser processing machine according to one or more embodiments.
[FIG. 2] FIG. 2 is a perspective view illustrating a detailed configuration example of a collimator unit and a processing head in the laser processing machine according to one or more embodiments.
[FIG. 3] FIG. 3 is a diagram for explaining the displacement of an irradiation position for a laser beam onto sheet metal by means of a beam movement mechanism.
[FIG. 4] FIG. 4 is a diagram for explaining a maximum value of a movement distance of a center position for a laser beam to be irradiated when marking a marking-off line on the surface of the sheet metal using a laser processing machine according to one or more embodiments.
[FIG. 5A] FIG. 5A is a diagram illustrating a direction in which molten metal is blown off by an assist gas when irradiating the laser beam such that a center G of the laser beam overlaps a center C of an opening 36a of a nozzle and overlaps a position of a center F where the assist gas is sprayed.
[FIG. 5B] FIG. 5B is a diagram illustrating a direction in which the molten metal is blown off by the assist gas when irradiating the laser beam in such a way as to be positioned by moving the center G of the laser beam by a distance J1, from the center C of the nozzle opening 36a and from the position of the center F where the assist gas is sprayed.
[FIG. 6A] FIG. 6A is a diagram illustrating a direction in which the molten metal is blown off by the assist gas when irradiating the laser beam in such a way as to be positioned by moving the center G of the laser beam by a distance J2 that is longer than the distance J1, from the center C of the nozzle opening 36a and from the position of the center F where the assist gas is sprayed.
[FIG. 6B] FIG. 6B is a diagram illustrating a direction in which the molten metal is blown off by the assist gas when irradiating the laser beam in such a way as to be positioned by moving the center G of the laser beam by a distance J3 that is longer than the distance J2, from the center C of the nozzle opening 36a and the position of the center F where the assist gas is sprayed.
[FIG. 7] FIG. 7 is a diagram for explaining an operation when marking a marking-off line L bent at an acute angle at a point M, based on a processing program, by means of the laser processing machine according to one or more embodiments.
[FIG. 8] FIG. 8 is a diagram for explaining a change in a linear distance from the center C of the nozzle opening 36a to the center G of the laser beam when changing a distance on a traveling route from the center C of the nozzle opening 36a to the center G of the laser beam, in a case where a marking-off line L bent by a laser processing machine according to one or more embodiments is marked.

### [DESCRIPTION OF EMBODIMENT]

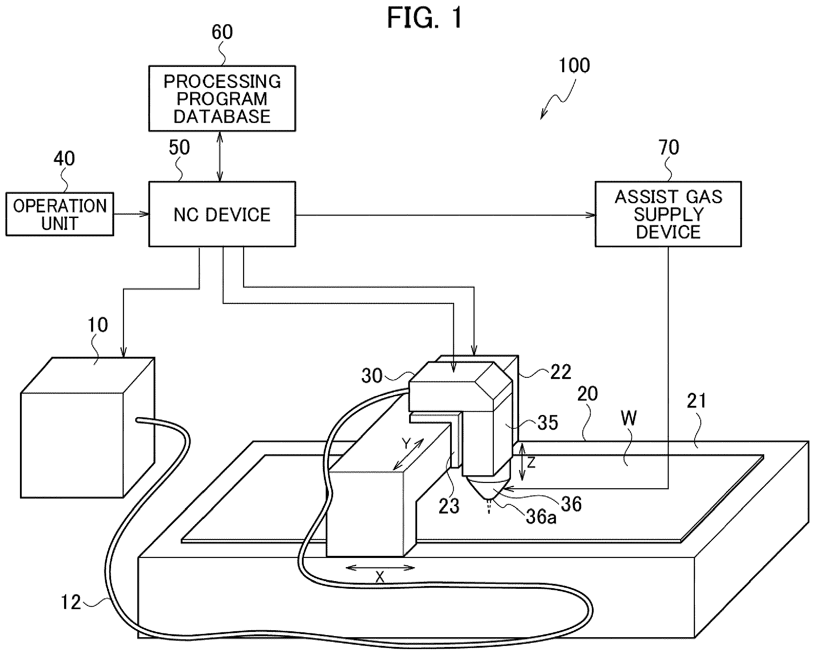

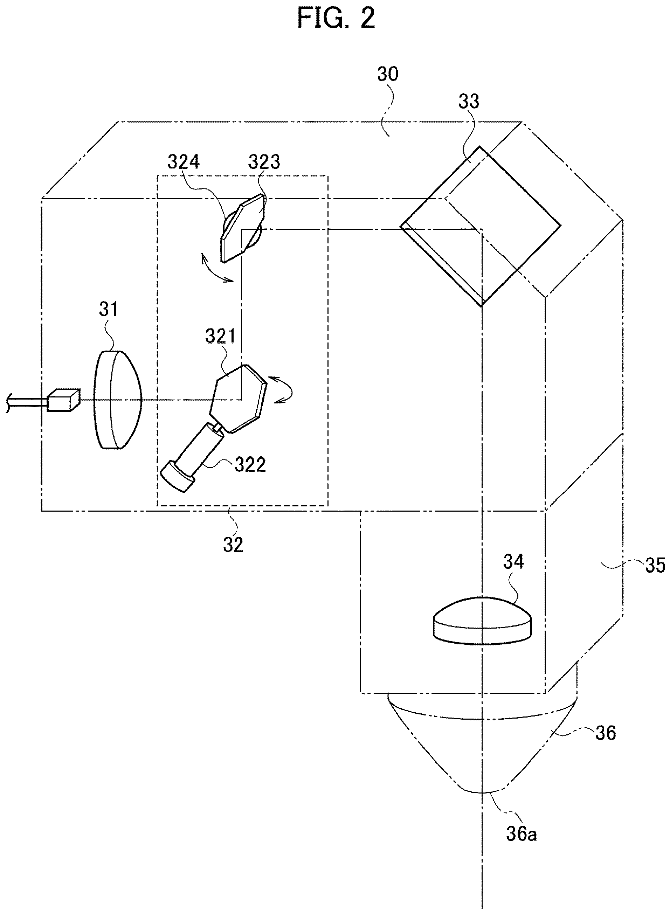

Hereinafter, a laser processing machine and a laser beam processing method according to one or more embodiments will be described with reference to the accompanying drawings. FIG. 1 is a diagram illustrating an overall configuration example of a laser processing machine 100 according to one or more embodiments. FIG. 2 is a perspective view illustrating a detailed configuration example of a collimator unit 30 and a processing head 35 in the laser processing machine 100 according to one or more embodiments.

The laser processing machine 100 includes a processing head 35, a focusing lens 34, an X-axis carriage 22 and a Y-axis carriage 23, a galvano scanner unit 32, an assist gas supply device 70, a processing program database 60, and an NC (numerical control) device 50. The processing program database 60 may be provided in the laser processing machine 100, or may be provided outside the laser processing machine 100.

When the processing program database 60 is provided in the laser processing machine 100, the processing program database 60 may be provided inside the NC device 50. When the processing program database 60 is provided outside the laser processing machine 100, the processing program database 60 may be provided in an automatic programming device or a data server. When the laser processing machine 100 performs processing of a sheet metal, the processing program database 60 can be provided in a discretionary position as long as a processing program is loaded inside the NC device 50 in an executable state.

A nozzle 36 for emitting a laser beam from an opening 36a is attached to the tip end of the processing head 35. The focusing lens 34 is provided in the processing head 35, and forms a beam spot on the surface of a sheet metal W by focusing the laser beam. The X-axis carriage 22 and the Y-axis carriage 23 move the processing head 35 relative to the surface of the sheet metal W, as a processing head movement mechanism. The galvano scanner unit 32 moves a laser beam emitted from the opening 36a, in the opening 36a as a beam movement mechanism. The assist gas supply device 70 supplies an assist gas to be sprayed onto the sheet metal W from the opening 36a, to the processing head 35 when the sheet metal W is processed. The processing program database 60 stores a processing program for marking a marking-off line with a predetermined shape on the sheet metal W.

The NC device 50 controls the galvano scanner unit 32 such that the center of a laser beam that is emitted from the opening 36a moves by a predetermined distance from the center of the opening 36a to the front of the traveling route of the irradiation position for the laser beam which is based on the processing program. In addition, the NC device 50 controls the X-axis carriage 22 and the Y-axis carriage 23 in such a way as to move the irradiation position for the laser beam along the traveling route which is based on the processing program, thereby marking a marking-off line with a predetermined shape on the sheet metal W.

Each component in the laser processing machine 100 will be described in detail below. In FIG. 1, the laser processing machine 100 includes a laser oscillator 10 that generates and emits a laser beam, a laser beam processing unit 20, and a process fiber 12 that transmits the laser beam emitted from the laser oscillator 10 to the laser beam processing unit 20. Note that the process fiber 12 may be single-core or multi-clad, and an optical coupler may be provided on the transmission path to the laser beam processing unit 20.

The laser processing machine 100 includes an operation unit 40, an NC device 50, a processing program database 60, and an assist gas supply device 70. The NC device 50 is an example of a control device for controlling each unit in the laser processing machine 100. As described above, the processing program database 60 may be provided outside the laser processing machine 100.

As the laser oscillator 10, either a laser oscillator which emits a laser beam with a predetermined wavelength by amplifying excitation light emitted from a laser diode, or a laser oscillator which directly utilizes a laser beam emitted from a laser diode is suitable. The laser oscillator 10 is a solid-state laser oscillator, a fiber laser oscillator, a disc laser oscillator, and a direct diode laser oscillator (DDL oscillator), for example.

The laser oscillator 10 emits a 1-µm band laser beam with a wavelength of 900 nm to 1100 nm. With a fiber laser oscillator and a DDL oscillator as examples, the fiber laser oscillator emits a laser beam with a wavelength of 1060 nm to 1080 nm, and the DDL oscillator emits a laser beam with a wavelength of 910 nm to 950 nm. In some cases, the laser oscillator 10 may use a blue laser with a wavelength of 440 nm to 490 nm in combination with a NIR (near infrared ray) wavelength band near 1 um, or a green laser with a wavelength of 530 nm to 550 nm in combination with a NIR wavelength band near 1 µm.

The laser beam processing unit 20 includes a machining table 21 on which the sheet metal W to be processed is mounted, the processing head 35 in which the nozzle 36 for emitting a laser beam from the circular opening 36a to the sheet metal W is attached to the tip end of the processing head 35, and the gate type X-axis carriage 22 and the gate type Y-axis carriage 23 for moving the processing head 35 to a processing position. The collimator unit 30 is fixed to the Y-axis carriage 23, and the processing head 35 is connected to the collimator unit 30. The X-axis carriage 22 is configured so as to be movable in the X-axis direction on the machining table 21. The Y-axis carriage 23 is configured so as to be movable in the Y-axis direction perpendicular to the X-axis on the X-axis carriage 22. The X-axis carriage 22 and the Y-axis carriage 23 function as a processing head movement mechanism for moving the collimator unit 30 and the processing head 35 along the surface of the sheet metal W in the X-axis direction, the Y-axis direction, or any combination direction of the X-axis and the Y-axis.

Instead of moving the collimator unit 30 and the processing head 35 along the surface of the sheet metal W, the collimator unit 30 and the processing head 35 may be fixed in position and configured to move the sheet metal W. The laser processing machine 100 may be provided with a movement mechanism that moves the collimator unit 30 and the processing head 35 relative to the surface of the sheet metal W.

The assist gas supply device 70 supplies an assist gas to the processing head 35 when the sheet metal W is processed. The assist gas supply device 70 can use oxygen, nitrogen, or air as an assist gas when the sheet metal W to be processed is an iron-based material. When oxygen is used as an assist gas, the assist gas supply device 70 controls the injection state of the gas so as to prevent the gas from over-combustion. The assist gas supply device 70 can use nitrogen or air as an assist gas when the sheet metal W is a stainless steel material. The assist gas supplied to the processing head 35 is sprayed from the opening 36a in a direction perpendicular to the sheet metal W. The assist gas blows off molten metal produced by the sheet metal W melting.

As illustrated in FIG. 2, the collimator unit 30 includes a collimation lens 31 for converting a laser beam of divergent light emitted from the process fiber 12 into parallel light (collimated light). The collimator unit 30 includes the galvano scanner unit 32, and a bend mirror 33 for reflecting a laser beam emitted from the galvano scanner unit 32 downward in the Z-axis direction perpendicular to the X-axis and Y-axis. The processing head 35 includes the focusing lens 34 for focusing a laser beam reflected by the bend mirror 33 and irradiating the sheet metal W with the laser beam. Note that a laser beam of divergent light emitted from the process fiber 12 moves such that the center of the optical axis of the laser beam is positioned at the center of the collimation lens 31.

The laser processing machine 100 is centered such that a laser beam emitted from the opening 36a of the nozzle 36 is positioned at the center of the opening 36a. In a reference state, the laser beam is emitted from the center of the opening 36a. The galvano scanner unit 32 functions as a beam movement mechanism for moving the laser beam, which moves in the processing head 35 and is emitted from the opening 36a, in the opening 36a. An operation for moving the laser beam by means of the galvano scanner unit 32 will be described later.

The galvano scanner unit 32 (beam movement mechanism) is provided at the stage prior to the processing head 35. The galvano scanner unit 32 includes scan mirrors 321 and 323 for reflecting an incident laser beam, a drive unit 322 for setting the scan mirror 321 at a predetermined angle, and a drive unit 324 for setting the scan mirror 323 at a predetermined angle. A laser beam incident on the scan mirror 321 is a laser beam that is emitted from the collimation lens 31, and a laser beam incident on the scan mirror 323 is a laser beam that is reflected by the scan mirror 321. The NC device 50 (control device) controls the drive units 322 and 324 in such a way as to move an irradiation position for the laser beam to a predetermined position by setting the scan mirrors 321 and 323 at a predetermined angle.

The drive unit 322 rotates the scan mirror 321 to set the scan mirror 321 at a predetermined angle, and the drive unit 324 rotates the scan mirror 323 to set the scan mirror 323 at a predetermined angle. The scan mirror 321 and the scan mirror 323 are provided so as to rotate in different directions.

The drive units 322 and 324 can set the scan mirrors 321 and 323 at predetermined angles, respectively, based on the control by the NC device 50. The galvano scanner unit 32 can move the beam spot of a laser beam that is irradiated onto the sheet metal W by changing the angle of either one or both of the scan mirror 321 and the scan mirror 323.

The galvano scanner unit 32 is an example of a beam movement mechanism, and the beam movement mechanism is not limited to the galvano scanner unit 32 having a pair of scan mirrors.

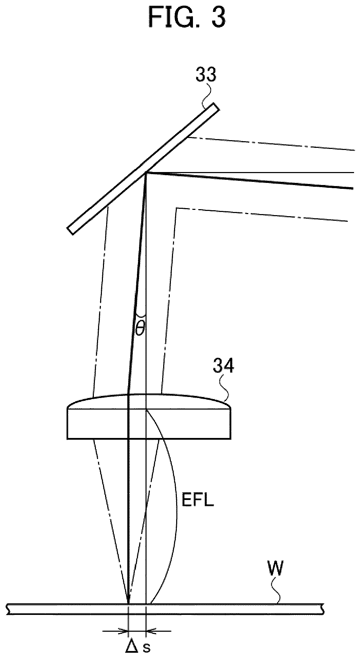

FIG. 3 is a diagram for explaining the displacement of an irradiation position for a laser beam onto the sheet metal W by means of the galvano scanner unit 32. Here, FIG. 3 illustrates a state in which either one or both of the scan mirror 321 and the scan mirror 323 is/are inclined and the position for the laser beam that is irradiated to the sheet metal W is displaced. In FIG. 3, a thin solid line, which is bent by the bend mirror 33 and passes through the focusing lens 34, illustrates the optical axis of the laser beam when the laser processing machine 100 is in the reference state.

In detail, the angle of the optical axis of the laser beam incident on the bend mirror 33 changes due to the operation of the galvanic scanner unit 32 positioned in front of the bend mirror 33, and the optical axis is shifted from the center of the bend mirror 33. In FIG. 3, for the sake of simplicity, the position for the laser beam incident on the bend mirror 33 is set to the same position before and after the operation of the galvanic scanner unit 32.

It is assumed that the optical axis of the laser beam is displaced from the position indicated by the thin solid line to the position indicated by the thick solid line, by the operation of the galvanic scanner unit 32. If the laser beam reflected by the bend mirror 33 is inclined at an angle 8, the irradiation position for the laser beam to the sheet metal W is displaced by a distance Δs. If the focal length of the focusing lens 34 is an EFL (effective focal length), the distance Δs is calculated by EFL × sinθ.

If the galvano scanner unit 32 inclines the laser beam at an angle θ in the direction opposite to that illustrated in FIG. 3, the irradiation position for the laser beam to the sheet metal W can be displaced by the distance Δs in the direction opposite to that illustrated in FIG. 3. The distance Δs is a distance less than the radius of the opening 36a, and is preferably a distance less than a maximum distance. The maximum distance is obtained by subtracting a predetermined allowable length from the radius of the opening 36a.

The NC device 50 can move the irradiation position for the laser beam in a predetermined direction by controlling the drive units 322 and 324 of the galvano scanner unit 32.

The processing program database 60 further stores information on a movement distance of an irradiation position for a laser beam corresponding to the depth of a marking-off line, which is set in advance. When acquiring information that specifies the depth of the marking-off line to be marked, the NC device 50 reads out the information on the movement distance of the irradiation position for the laser beam corresponding to the depth of the specified marking-off line, and emits the laser beam from the opening 36a with the output energy corresponding to the depth. In addition, the NC device 50 controls the galvano scanner unit 32 so as to move the center of the laser beam to be emitted from the center of the opening 36a by the movement distance that is read out. The movement distance information of the irradiation position for the laser beam is set so as to become longer as the marking-off line to be processed increases in depth.

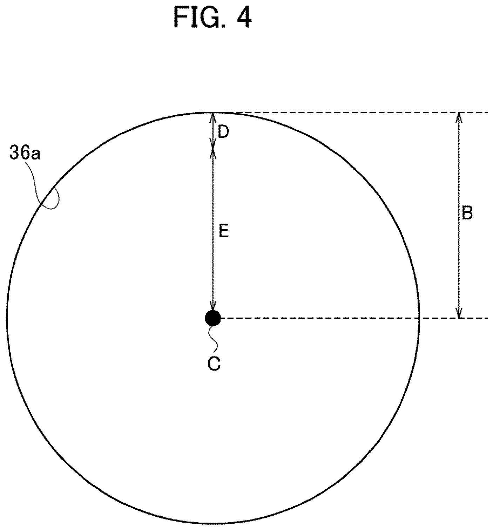

FIG. 4 is a diagram for explaining a maximum value of a movement distance of a center position for a laser beam that is irradiated when marking a marking-off line on the surface of the sheet metal W by means of the laser processing machine 100. As illustrated in FIG. 4, when the center of the opening 36a of the nozzle 36 is C and the radius is B, the maximum value by which the center position for the laser beam that is irradiated can be moved from the center C of the opening 36a is the distance E obtained by subtracting the length D that is 1/2 of the focusing diameter from the radius B.

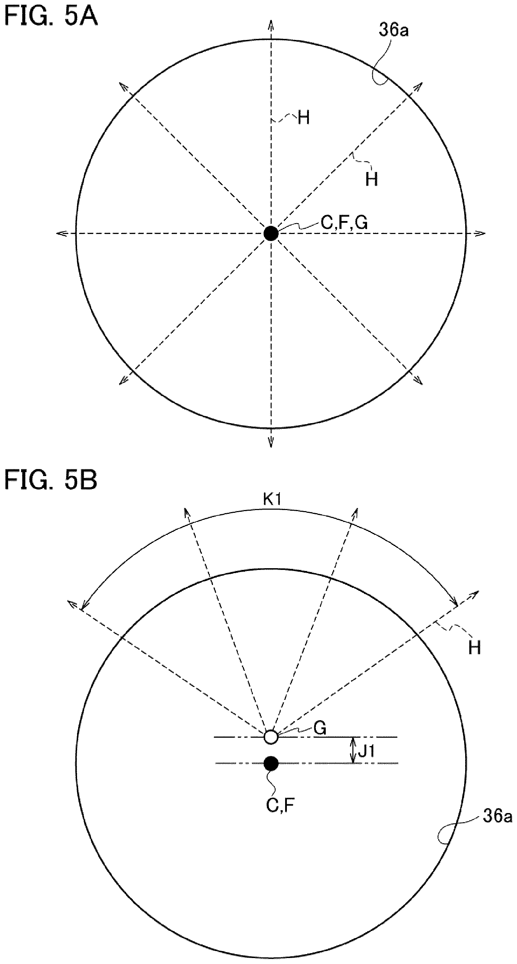

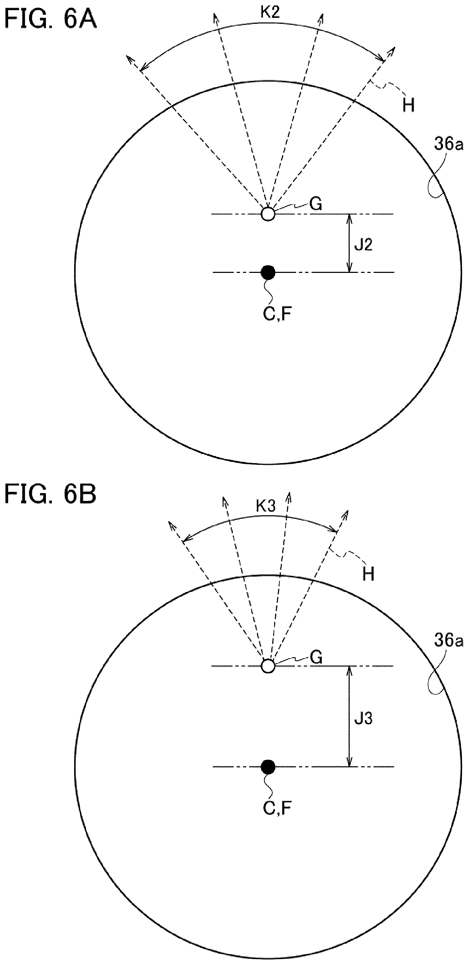

FIGS. 5A, 5B, 6A, and 6B are diagrams for explaining a direction in which generated molten metal is blown off by an assist gas, when the surface of the sheet metal W is irradiated with a laser beam by changing the position of the center G of the laser beam with respect to the center C of the opening 36a by means of the laser processing machine 100. In one or more embodiments, the position of the center F where the assist gas is sprayed is always the same position as the center C of the opening 36a.

As illustrated in FIG. 5A, when irradiating the laser beam such that the center G of the laser beam overlaps the center C of the opening 36a, the center G of the laser beam overlaps the position of the center F where the assist gas is sprayed, and the molten metal H is blown off radially from the center G of the laser beam in the surrounding directions of 360°.

As illustrated in FIG. 5B, when irradiating the laser beam in such a way to be positioned by moving the center G of the laser beam by a distance J1 from the center C of the opening 36a, the position of the center G of the laser beam is shifted from the position of the center F where the assist gas is sprayed. In this case, the molten metal H is blown off from the center G of the laser beam in a range K1 which extends in a fan-like form at a predetermined angle in the direction opposite to the center C of the opening 36a.

As illustrated in FIG. 6A, when irradiating the laser beam in such a way as to be positioned by moving the center G of the laser beam from the center C of the opening 36a by a distance J2 longer than the distance J1, the position of the center G of the laser beam is further separated from the position of the center F where the assist gas is sprayed. In this case, the molten metal H is blown off from the center G of the laser beam in a range K2 which extends in a fan-like form at an angle narrower than that in FIG. 5B, in the direction opposite to the center C of the opening 36a.

As illustrated in FIG. 6B, when irradiating the laser beam in such a way as to be positioned by moving the center G of the laser beam from the center C of the opening 36a by a distance J3 longer than the distance J2, the position of the center G of the laser beam is further separated from the position of the center F where the assist gas is sprayed. In this case, the molten metal H is blown off from the center G of the laser beam in a range K3 which extends in a fan-like form at an angle narrower than that in FIG. 6A, in the direction opposite to the center C of the opening 36a.

The laser processing machine 100 configured as described above marks a marking-off line on the surface of the sheet metal W using the laser beam emitted from the laser oscillator 10. When marking the marking-off line, an instruction to start the marking processing is input to the NC device 50, together with the information to specify the depth of the marking-off line. When acquiring the instruction to start the marking processing, the NC device 50 reads out the processing program and the information on the movement distance of the irradiation position for the laser beam corresponding to the depth of the specified marking-off line, from the processing program database 60.

The NC device 50 emits a laser beam from the processing head 35 with an output energy corresponding to the specified depth, and controls the X-axis carriage 22 and the Y-axis carriage 23 to mark a marking-off line with a predetermined shape on the surface of the sheet metal W, based on the processing program that is read out. At that time, the NC device 50 controls the drive units 322 and 324 of the galvano scanner unit 32 such that the center G of the laser beam emitted from the opening 36a moves from the center C of the opening 36a by the movement distance that is read out, to the front of the traveling route of the irradiation position for the laser beam that is based on the processing program that is read out.

As the irradiation position for the laser beam is moved from the center C of the opening 36a to the front of the traveling route of the irradiation position for the laser beam, the center G of the laser beam is shifted in the traveling direction of the laser beam from the position of the center F where the assist gas is sprayed. For this reason, the direction in which molten metal is blown off is inclined in the direction opposite to the area where a marking-off line is marked, thereby preventing the molten metal from adhering to the marked marking-off line.

In addition, since the movement distance of the center G of the laser beam is set to be longer as the marking-off line to be processed increases in depth, the range in which the molten metal H is blown off becomes narrower as the marking-off line increases in depth, and even when the amount of the molten metal increases by processing a deep marking-off line, the molten metal is prevented from being blown off onto the marked marking-off line.

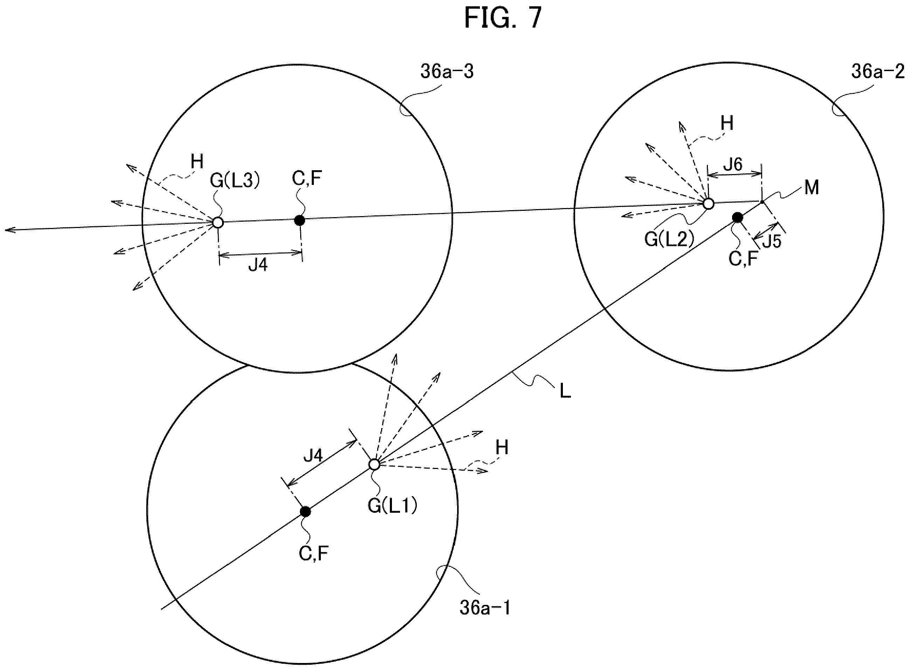

An example of an operation for marking a marking-off line by means of the laser processing machine 100 will be described with reference to FIG. 7. FIG. 7 is a diagram for explaining the operation in a case where the laser processing machine 100 marks a marking-off line L that is bent at an acute angle at a point M, based on the stored processing program. In one or more embodiments, while marking the marking-off line L, the NC device 50 controls the drive units 322 and 324 of the galvano scanner unit 32 in such a way as to implement a state in which the center G of the laser beam has always moved from the center C of the opening 36a by a movement distance J4 in the traveling direction of the irradiation position for the laser beam. The NC device 50 emits the laser beam from the opening 36, and controls the X-axis carriage 22 and the Y-axis carriage 23 to move the nozzle 36 so as to move the irradiation position for the laser beam along the traveling route for marking the marking-off line L, based on the processing program.

When marking the linear marking-off line L before the center G of the laser beam reaches the point M, the NC device 50 fixes the direction of the scan mirrors 321 and 323 in such a way as to implement a state in which the center G of the laser beam has moved from the center C of the opening 36a to the front of the traveling route of the laser beam in a linear direction by a traveling distance J4. For example, when the opening of the nozzle 36 is positioned at the position 36a-1, the center G of the laser beam has moved from the center C of the opening 36a-1 to the front of traveling direction of the marking-off line L in a linear direction by the traveling distance J4, which is positioned at the position L1.

During the marking processing of the marking-off line L, an assist gas is supplied from the assist gas supply device 70 to the processing head 35, and thus the assist gas is sprayed from the opening 36a-1 of the processing head 35 to the sheet metal W. At this time, the assist gas is always sprayed perpendicularly to the sheet metal W from the center C of the opening 36a-1, and diffuses radially from the center F on the sheet metal W where the assist gas is sprayed, in the surrounding directions of 360°. Under the pressure generated by the diffusion of the assist gas, the molten metal H spreads in a fan-like form from the center G (L1) of the laser beam in the direction opposite to the center C of the opening 36a-1, that is, in the traveling direction, and is blown off.

Thereafter, when the trajectory of the center G of the laser beam is bent at the point M and the opening of the nozzle 36 reaches, for example, the position of 36a-2, the center G of the laser beam is positioned at the position L2 which maintains a state where the total of the distance J5 from the center C of the opening 36a-2 to the point M and the distance J6 from the point M to the center G of the laser beam is equal to the distance J4.

The NC device 50 maintains a state in which the total of the distance J5 and distance J6 is equal to the distance J4, and controls the direction of the scan mirrors 321 and 323, and the X-axis carriage 22 and the Y-axis carriage 23 such that the laser beam and the nozzle 36 move in the traveling route marking the marking-off line L. That is, the NC device 50 moves the direction of the scan mirrors 321 and 323 and the position of the nozzle 36 from the time when the center G of the laser beam reaches the point M until the time when the center C of the opening 36a reaches the point M.

At this time, the molten metal H spreads in a fan-like form from the center G (L2) of the laser beam in the direction opposite to the center C of the opening 36a-2, that is, in the direction different from the formed marking-off line L, and is blown off.

Thereafter, when the center C of the opening 36a reaches the point M, the NC device 50 fixes the direction of the scan mirrors 321 and 323 in such a way as to implement a state in which the center G of the laser beam has moved from the center C of the opening 36a to the front of the traveling route of the laser beam in a linear direction by the movement distance J4. For example, when the opening of the nozzle 36 reaches the position of 36a-3, the center G of the laser beam has moved from the opening 36a-3 to the front of the traveling direction of the marking-off line L in a linear direction by the movement distance J4, which is positioned at the position L3. In this case, the molten metal H spreads in a fan-like form from the center G (L3) of the laser beam in the direction opposite to the center C of the opening 36a-3, that is, in the traveling direction, and is blown off.

Thus, the use of the galvano scanner unit 32, even when marking a marking-off line L bent at an acute angle, makes it possible to continuously execute the processing without interruption in order to change the traveling direction of the irradiation position for the laser beam. In addition, during the marking processing of the marking-off line L that bends in this way, at all times the molten metal H is not blown off in the direction of the marked marking-off line, thereby preventing the molten metal H from adhering to the marking-off line.

When marking a marking-off line L bent in an acute angle as described above, the direction in which the molten metal H is blown off becomes closer to the marked marking-off line L than when marking is linearly performed, from the time when the center G of the laser beam reaches the point M until the time when the center C of the opening 36a reaches the point M. For this reason, it is preferable to keep the center G of the laser beam farther from the center C of the opening 36a during this period of time than when marking a linear marking-off line.

Therefore, the NC device 50 may increase the distance that the center G of the laser beam moves from the center C of the opening 36a when marking a bent marking-off line based on the processing program, to be more than the distance that the center G of the laser beam moves from the center C of the opening 36a when marking a linear marking-off line.

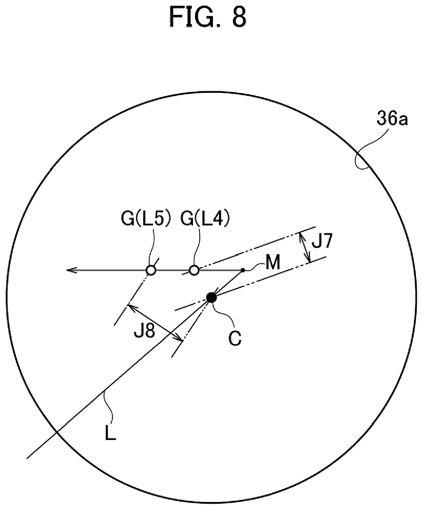

FIG. 8 is a diagram for explaining a change in the linear distance from the center C of the opening 36a to the center G of the laser beam when changing the distance on the traveling route from the center C of the opening 36a to the center G of the laser beam in a case where marking the marking-off line L bent at the point M.

As illustrated in FIG. 8, when the distance on the traveling route from the center C of the opening 36a to the center G of the laser beam has increased by changing the position of the center G of the laser beam with respect to the center C of the opening 36a from L4 to L5, the linear distance from the center C of the opening 36a to the center G of the laser beam increases from J7 to J8. For this reason, from the time when the center G of the laser beam reaches the point M until the time when the center C of the opening 36a reaches the point M, the linear distance on the traveling route from the center C of the opening 36a to the center G of the laser beam has increased, which increases the linear distance from the center C of the opening 36a to the center G of the laser beam. This makes it possible to prevent the molten metal H from adhering to the marking-off line L more reliably.

Thus, it is possible to appropriately change the position of the center G of a laser beam according to the shape of the sheet metal W and the shape of a marking-off line to be processed. In addition, even when moving the center G of the laser beam from the center C of the opening 36a in the lateral direction or diagonally forward of the traveling route of the laser beam, the molten metal H is blown off along the traveling direction, thereby preventing the molten metal H from adhering to the marking-off line.

According to the above one or more embodiments, even when the amount of molten metal increases by deeply engraving a marking-off line which marks the sheet metal W, the molten metal that is blown off does not adhere to the marked marking-off line, thereby making it possible to form the marking-off line with good quality.

The present invention is not limited to the above-described embodiment, and may be modified in a range not deviating from the scope of the present invention.

This present application claims priority under Japanese Patent Application No. 2021-085254 filed with the Japan Patent Office on May 20, 2021, the entire contents of which is incorporated herein by reference.

## Claims

1. A laser processing machine comprising:
a processing head in which a nozzle for emitting a laser beam from an opening is attached to a tip end of the processing head;
a focusing lens that is provided in the processing head and configured to form a beam spot on a surface of a sheet metal by focusing the laser beam;
a processing head movement mechanism configured to move the processing head relative to the surface of the sheet metal;
a beam movement mechanism configured to move the laser beam emitted from the opening, in the opening;
an assist gas supply device configured to supply an assist gas to be sprayed onto the sheet metal from the opening, to the processing head when the sheet metal is processed; and
a control device configured to control the beam movement mechanism such that a center of the laser beam that is emitted from the opening moves by a predetermined movement distance, from a center of the opening to in front on a traveling route of an irradiation position for the laser beam that is based on a processing program for marking a marking-off line with a predetermined shape on the sheet metal, and to perform control for the marking-off line with the predetermined shape to be marked on the sheet metal by controlling the processing head movement mechanism in such a way as to move the irradiation position for the laser beam along the traveling route.

2. The laser processing machine according to claim 1, wherein
the beam movement mechanism is provided at a stage prior to the processing head, and includes a scan mirror for reflecting an incident laser beam, and a drive unit for setting the scan mirror at a predetermined angle, and
the control device controls the drive unit in such a way as to move the irradiation position for the laser beam to a predetermined position by setting the scan mirror at a predetermined angle.

3. The laser processing machine according to claim 1 or 2, wherein
a processing program database stores the processing program, and information on a movement distance of an irradiation position for a laser beam corresponding to a depth of a marking-off line, which is set in advance, and
when acquiring information that specifies a depth of a marking-off line to be marked, the control device reads out, from the processing program database, the information on the movement distance of the irradiation position for the laser beam corresponding to the depth of the specified marking-off line, and emits the laser beam from the opening with output energy corresponding to the depth, and controls the beam movement mechanism so as to move the center of the laser beam that is emitted from the center of the opening by the movement distance that is read out.

4. The laser processing machine according to claim 1 or 2, wherein
the control device increases a distance that the center of the laser beam moves from the center of the opening when marking a bent marking-off line based on the processing program, to be more than a distance that the center of the laser beam moves from the center of the opening when marking a linear marking-off line.

5. A laser processing method comprising:
when sheet metal is processed, by means of a laser processing machine provided with an assist gas supply device for supplying an assist gas to be sprayed onto sheet metal to a processing head in which a nozzle for emitting a laser beam from an opening is attached to a tip end of the processing head,
irradiating a surface of the sheet metal with the laser beam that is focused, from the opening of the nozzle; and
moving a center of the laser beam that is emitted from the opening by a predetermined movement distance, from a center of the opening to front of a traveling route of an irradiation position for the laser beam that is based on a processing program for marking a marking-off line with a predetermined shape on the sheet metal, and moving the irradiation position for the laser beam along the traveling route based on the processing program, thereby marking the marking-off line with the predetermined shape on the sheet metal.
